# EUROPÄISCHE PATENTSCHRIFT

(11) **EP 3 386 818 B1**
(45) Veröffentlichungstag und Bekanntmachung des Hinweises auf die Patenterteilung: **14.09.2022**
(21) Anmeldenummer: 16805836.0
(22) Anmeldetag: 05.12.2016
(51) Int. Cl.: B60T 13/74, F16D 51/28, F16D 65/22

(54) **ELEKTRISCHES TROMMELBREMSSYSTEM MIT RATIONALISIERTEM ELEKTRISCHEM FESTSTELLBREMSAKTUATOR**
ELECTRIC DRUM BRAKE SYSTEM HAVING A RATIONALIZED ELECTRIC PARKING BRAKE ACTUATOR
SYSTÈME DE FREIN À TAMBOUR ÉLECTRIQUE AVEC ACTIONNEUR RATIONALISÉ DE FREIN DE STATIONNEMENT

(30) Priorität: 10.12.2015 DE 102015224761; 03.06.2016 DE 102016209783
(43) Veröffentlichungstag der Anmeldung: 17.10.2018
(73) Patentinhaber: Continental Automotive Technologies GmbH, 30165 Hannover (DE)
(72) Erfinder: WINKLER, Thomas, 55131 Mainz (DE); BALZ, Jürgen, 65510 Hünstetten-Oberlibbach (DE); FROSCHAUER, Marco, 61440 Oberursel/TS. (DE); BAUER, Jürgen, 65187 Wiesbaden (DE); WALTER, Patrick, 63075 Offenbach am Main (DE); HEINZ, Stefan, 65817 Eppstein (DE); MERKEL, Philipp, 65779 Kelkheim (DE); BIJANZADEH, Pejman, 63069 Offenbach (DE)
(74) Vertreter: Continental Corporation
(86) Internationale Anmeldenummer: PCT/EP2016/079726
(87) Internationale Veröffentlichungsnummer: WO 2017/097696

(56) Entgegenhaltungen:
- DE-A1-102013 210 528
- KR-A- 20130 123 787
- KR-A- 20130 123 788
- US-A1- 2014 020 997
- US-A1- 2015 345 580

## Beschreibung

Die vorliegende Erfindung betrifft ein Trommelbremssystem mit elektrischer Feststellbremsbetätigung für ein Kraftfahrzeug wobei die elektrische Feststellbremsbetätigung auf einer Außenseite von einer Ankerplatte angeordnet ist. Ein beispielhaftes Trommelbremssystem ist aus der US 9 175 737 B1 bekannt.

Aus der EP 0 920 390 B1 ist ein elektromechanisch betätigbares Trommelbremsmodul mit einer besonders geringen Gesamtbaugröße bekannt. Dabei ist ein Außenumfang einer zylindrischen Betätigungseinheit durch eine Öffnung einer Ankerplatte eingeführt. Eine drehbare Antriebsmutter ist über das Motorgehäuse auf einer Trägerplatte abgestützt. Zur Verkürzung von der Baulänge der Betätigungseinheit ist vorgesehen, dass ein Rotor von einem besonders gestalteten Elektromotor eine Spindelanordnung radial außen umgreift und verdrehsicher führt. Diese Bauart erfordert einen vergleichsweise leistungsstark dimensionierten Elektromotor mit speziellem Gehäuse sowie eine speziell angepasste Trägerplatte.

Eine elektromechanisch betätigbare Duo-Servo-Trommelbremse, ohne Seilzuganlenkung, ist aus der EP 594 233 B1 bekannt. Dabei ist ein Elektromotor auf einer Rückseite einer Ankerplatte angeordnet. Die Motorachse ist rechtwinklig zu einer Drehachse einer Bremstrommel arrangiert und treibt eine drehbar sowie axial unverschiebbar platzierte Gewindespindel an. Die Gewindespindel ist parallel zur Motorachse in der Bremstrommel vorgesehen, und in einem Gehäuse gelagert. Die Gewindespindel steht mit einem axial verschiebbar sowie unverdrehbar im Gehäuse gelagerten Element in Eingriff, das ein Hebelgetriebe beaufschlagt. Diese Bauart erfordert neben einem vergleichsweise leistungsstark dimensionierten Elektromotor noch weitere, sehr speziell ausgebildete, Bauteile und erlaubt daher keine einfache Variation in der Großserie. Heißabstellen ist nicht unproblematisch.

Die US 6 321 884 B1 definiert am Beispiel von einem Trommelbremssystem mit elektrischer Parkbremse ein elektrisches Verfahren zum Betätigen oder zum Lösen. Dabei dient eine elektronische Steuereinheit zur elektrischen Modulation während der Feststellbremsaktuatoransteuerung. Die elektrische Modulation beinhaltet im Einzelnen eine gezielte Bestromung und Bestromungsunterbrechung, und wobei diese Modulation im laufenden Prozess gegebenenfalls wiederholt auszuführen ist.

Aus der US 8 011 482 B2 geht ein Drum-in-Hat-Trommelbremsmodul (DIH) mit elektrischer Betätigung vergleichbar der EP 594 233 B1 hervor, deren Feststellbremsaktuatoreinheit ein Federglied umfasst, das im betätigten Zustand eine Folgekraft bereitstellt, um einer Zugstange einen zusätzlichen Weg bereitzustellen, wenn eine Bremsbackenmitlaufbewegung stattfindet.

Aus der DE 812 141 C geht ein Schneckengetriebe hervor.

Die KR 2013 0123 787 A bezieht sich auf ein Trommelbremssystem mit elektrischer Feststellbremsantriebsvorrichtung in Komponentenbauweise mit extern allokiertem Elektromotor umfassend ein besonderes Gehäuse sowie umfassend Dichtungsfugen zwischen Elektromotor und einem Getriebegehäuse sowie zwischen dem Getriebegehäuse und einem Spindelgehäuse, und wobei alle Komponenten jeweils nebeneinander versetzt auf einer Außenseite von einer Ankerplatte arrangiert sind. Der Elektromotor treibt im Drehantrieb eine drehbar und axial fest abgestützte Antriebsmutter an, die ihrerseits eine verdrehgesichert sowie axial verschiebbar in dem Spindelgehäuse gelagerte Spindel einer Spindelanordnung antreibt, und über einen Betätigungszug an einer Bremsbacke derart angreift, dass diese eine Betätigungsbewegung in Richtung Bremstrommel oder eine umgekehrt gerichtete Lösebewegung ausführen kann. Das Elektromotorgehäuse ist mit elektrischer Schnittstelle ausgerüstet. Die zusätzlich auch noch bekannt gewordene KR 2013 0123 788 A geht nicht über den Inhalt der KR 2013 0123 787 A hinaus.

Die US 2015/0345580 A1 bezieht sich auf eine elektrisch integriert angeordnete Feststelltrommelbremse, und wobei die Feststelltrommelbremse ohne Betriebsbremsfunktion ist. Ein rückseitig einer Ankerplatte arrangierter elektrischer Getriebe-Antriebsstrang ist stückig in Komponenten aufgelöst dargestellt und verfügt über einen exponierten Elektromotor mit Anschlussfahnen zum Antrieb einer Schneckenstufe zum Drehantrieb eines Mutter-Spindel-Triebs der in einem Spindelgehäuse aufgenommen ist, und wobei an der Spindel ein Betätigungszug angeschlossen ist. Das Spindelgehäuse nimmt zwei Schraubenfedern auf, denen zwei Löseendanschlägen zugeordnet sind, zwecks redundanter Löseendanschlagerkennung mit Hilfe erkannter elektrischer Ströme I1 - I3.

Die vorliegende Erfindung beruht demgegenüber auf der Aufgabe, ein alternatives effizienteres elektrisches Trommelbremssystem anzubieten, welches bei hohen Zuspannkräften die Nachteile des Standes der Technik umgeht, und dennoch einen rationalisierten wetterfesten Aufbau bei vereinfachter Montage der Komponenten ermöglicht.

Die Aufgabe wird gemeinsam mit der Merkmalskombination des Hauptanspruchs gelöst, und wobei das Getriebegehäuse (8) eine wannenförmige Getriebegehäuseunterschale (8a) mit erhabenem Motordom (35) aufweist, einschließlich elektrischer Schnittstelle (51) sowie über einen Getriebegehäusedeckel (8b) mit erhabenem Getriebedom (36) verfügt, und wobei Achsen A1, A2 weitgehend rechtwinklig und mit definiertem Achsabstand X zueinander versetzt vorgesehen sind.

Eine Achse A1 durch eine Motorwelle vom Motor einschließlich drehfest am freien Motorwellenende angekoppeltem Schraubradritzel und eine Achse A2 der Spindelanordnung einschließlich drehfest mit der Antriebsmutter gekoppeltem Schraubrad etwa im rechten Winkel zueinander angeordnet so dass eine einzige Rädergetriebestufe des Feststellbremsaktuators definiert ist. Durch frappierend einfach sowie stringente modulare Aufteilung in vorgefügte Baugruppen nämlich eine (Antriebs-)Achse A 1 und eine (Abtriebs-)Achse A 2 kann in besonders wegweisender und überraschender Vereinfachung auf mehrere zueinander hochpräzise auszurichtende Stirnradgetriebe(stufen) verzichtet werden. Die hochgenaue Lagerung rotierender Stirnradgetriebewellen ist erfindungsgemäß rationalisiert und der Bedarf an Getrieberädern ist minimiert. Vorteilhafterweise ist eine erfindungsgemäß ausgebildete Feststellbremsaktuatorik mit einem einstufigen Schraubradgetriebe besonders bruchfest und auch unempfindlich gegen hochlastinduzierte Achsdurchbiegung unter der erhöhten Lastspielanzahl von modernen elektromechanischen Feststellbremsen. Ganz nebenbei wird zusätzlich ein komfortabel abgedämpftes Geräuschemissionsverhalten bei hoher Dauerfestigkeit und einfacher Montage sowie stromloser Selbsthemmung erzielt.

Eine physikalisch besonders günstige Schnittstellenkonfiguration für eine zweckmäßige Komponentenmontage in Bezug auf die Ankerplattenausrichtung am Kraftfahrzeug ist gegeben, wenn die Achse A1 vom Motor in der Einbauposition vertikal ausgerichtet sowie rechtwinklig zu einer Raddrehachse D arrangiert ist. Dabei sollte das freie Motorwellenende mit dem Schraubradritzel (bspw. zylinder- oder globoidverzahnt) vertikal unten (also erdbodennah) arrangiert sein, und ein freies Ende vom Motordom ist entgegen der Schwerkraftwirkung nach vertikal oben (erdbodenentfernt) auszurichten. Dies ermöglicht eine besonders wetterfeste Bauweise unter selbständigem Kondensatablauf und wobei sogar eine selbsttätige Schmierstoffsammlung im Bereich vom Zahneingriff des Schraubradgetriebes ermöglicht ist. Im Gegenzug ermöglicht diese Konfiguration dass eine unerwünschte Verunreinigung des Motorinnenraums (empfindlicher Luftspalt zwischen Permanentmagneten und elektrischen Spulen) oder des Kommutator-/Kohlebürstenapparates durch irgendwelche Fremdmedien oder Schmierstoff ohne zusätzliche Merkmale vermieden wird. Es wird ermöglicht, dass eine Schmierstofffüllmenge auf das zwingend notwendige Minimum reduziert ist. Zusätzlich zur Konzentration sämtlicher elektrischer Schnittstellen im Bereich vom freien Ende des Motordoms wird grundsätzlich empfohlen, dass Kohlebürsten am Lagerschild vom B-Lager (Loslager) am freien Ende des Motordoms arrangiert sind - also unter besonderem Schutz - mit dem wellenfesten Kommutator kooperieren.

Wenn das Getriebegehäuse über eine flüssigkeitsundurchlässige sowie gasdurchlässige Membran zwischen Innenraum und Umgebungsatmosphäre verfügt, wird ein Druckgefälle zwischen Innenraum und Umgebungsatmosphäre vermieden. Insbesondere ermöglicht die Membran einen pneumatischen Druckausgleich als Gegenmaßnahme für eine translatorische Pumpbewegung der Spindel. Demzufolge wird eine unerwünschte Innenraumverunreinigung anhand eindringender Bestandteile einer unpassenden Umgebungsatmosphäre (störende Partikel, störendes Fluid oder Gemische davon) vermieden.

Im Übrigen ermöglicht die Erfindung zudem eine bauraumsparende und gleichzeitig individuelle, effiziente Applikation bei unterschiedlichsten Radbremskonfigurationen indem die Achse A2 schiefwinklig zur Raddrehachse D und auch windschief zur Ankerplatte platzierbar ist, und wobei der Betätigungszug zumindest auf der Innenseite der Ankerplatte entlang einer Raumkurve R gekrümmt umgelenkt sowie horizontal geführt arrangiert ist.

Der Aufbau vom Getriebegehäuse ist rationell zweistückig aus Kunststoffwerkstoff wobei als Schnittstelle zur Ankerplatte ein gesonderter Adapter möglich ist. Das Getriebegehäuse umfasst einerseits eine wannenförmige Getriebegehäuseunterschale mit Schnittstelle zur Ankerplatte und erhabenem Motordom zwecks Motoraufnahme einschließlich elektrischer Schnittstelle. Der Vervollständigung dient der drehsteif montierte Getriebegehäusedeckel mit einstückig daran ausgeprägtem Getriebedom zwecks Führung der Spindelanordnung, deren Achsen A1, A2 zueinander im Wesentlichen rechtwinklig sowie mit Achsabstand X versetzt angeordnet sind.

Dem Fahrzeughersteller wird ein Mehrwert verschafft, wenn sämtliche Schnittstellen für hydraulische Rohrleitung sowie Verkabelung gewissermaßen gebündelt in einem Sektor oberhalb von der Raddrehachse (zwischen 9-Uhr Position und 3-Uhr Position der Ankerplatte) konzentriert vorgesehen sind. In weiter konzentrierter Ausgestaltung kann die besagte Schnittstellenkonzentration besonders geschützt zwischen der 12-Uhr Position und der 3-Uhr Position von der Ankerplatte gebündelt vorgesehen sein. Die Leitungsführung (hydraulisch + elektrisch) kann ebenfalls gebündelt vorgesehen sein.

In Verbindung mit einer frei auskragenden, "fliegenden" Lagerung vom Schraubradritzel am freien Motorwellende wird eine besonders effiziente Schnittstellenkonfiguration und Montage zwischen beteiligten Komponenten anhand der Motorwellenlagerung in Motorgehäuse und Getriebegehäuse erhalten, was den Bauaufwand rationalisiert. Mit anderen Worten werden Querkraftanteile aus der Schraubradverzahnung nicht unmittelbar direkt über eine Wellenlagerung in dem Getriebegehäuse abgefangen, sondern über die Motorwellenlagerung (anteilige Lagerkraftaufteilung auf A-/B-Lager) und die mittelbare oder unmittelbare Motorgehäuseaufnahme im Motordom. Dabei kann eine Motorzentrieraufnahme über einen Motortopfboden oder über ein metallisches Lager, Lagerschild beziehungsweise eine Schottwand, Lagerbrille oder ähnliches Bauteil auch anhand beliebiger Kombination und Interaktion der genannten Merkmale mittelbar oder unmittelbar am Motor angreifen. Rein beispielhaft ist ein Lager(außen)ring vom A-Lager (Festlager, bevorzugt in Wälzlagergestaltung) in einem integralen Lagersitz vom Topfboden des Motorgehäuse aufgenommen. Die axial gerichteten Schubkräfte aus der Schraubradverzahnung, die nennenswert bei Betätigung der Feststellbremse und gegebenenfalls bei stromloser Selbsthemmung auf die Motorwelle einwirken, werden im Kraftfluss über Schraubradritzel, Motorwelle, A-Lager und das Motorgehäuse primär im Bereich vom feien Ende des Motordoms per Axialanschlag in die Getriebegehäuseunterschale eingeprägt.

In Variation dieser Ausgestaltungen ist es möglich, dass ein A-Lager von der Motorwelle außen am Motor sowie abtriebsseitig vorstehend arrangiert ist, und wobei dessen Lageraussenring im festen Sitz in einer Aufnahme vom Getriebegehäuse zentriert aufgenommen und fixiert ist, so dass Kräfte (Längs- und Querkräfte) aus dem Schraubradgetriebe zentral sowie unmittelbar direkt über das A-Lager in das Getriebegehäuse eingeleitet werden können. Es ist zudem möglich aber nicht zwingend, dass das Motorgehäuse, in Gestalt von Topfboden oder Lagerschild, zwecks Kooperation mit dem Außenring vom A-Lager, mit einem Zentrierbund versehen wird. Somit geschieht die Zentrierung und Festlagerung zwischen Motorwelle und Getriebegehäuse über das A-Lager und das B-Lager ist als Loslager für Querkraftübertragung verantwortlich.

In der Zeichnung zeigt, teilweise schematisch und teilweise in verschiedenem Maßstab, Schnitt, Ansicht oder Perspektive:
Fig. 1 zwecks allgemeiner Erläuterung eine bekannte elektromechanische Trommelbremsaktuatorik gemäß WO2012/104395 A1,
Fig. 2 ein erfindungsgemäßes Trommelbremssystem, in etwa maßstäblich, von Innen,
Fig 3 vergrößerter Schnitt entlang der Linie III-III in Fig. 2,
Fig. 4 ein perspektivisch sowie teils aufgebrochen und vergrößert erläuterter Antriebsstrang der elektromechanischen Feststellbremsaktuatorik,
Fig. 5a-c Ansichten der einzigen Rädergetriebestufe vom Feststellbremsaktuator (Schraubradgetriebestufe),
Fig. 6 Explosionszeichnung der Feststellbremsaktuatorik, in etwa maßstäblich,
Fig. 7 + 8 vergrößerte Darstellung der wesentlichen Bauteile einer Spindelanordnung aufgelöst/vormontiert,

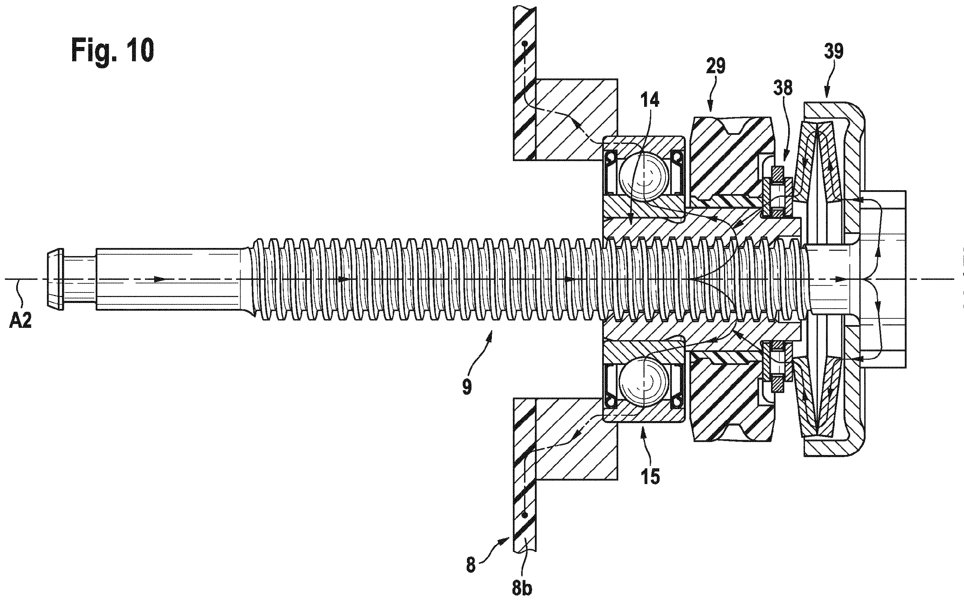

Fig. 9 + 10 Lagerung der Bauteile der Spindelbaugruppe aus Fig. 7 + 8 im Getriebegehäuse jeweils betätigt/in Lösestellung zum Teil unter Verdeutlichung vom Kraftfluss (vgl. Fig. 10),
Fig. 11 idealisiert-modellhafte Zusammenhänge zwischen Kraft (F) über einem Stellweg s, bezogen auf die Spindel des Feststellbremsaktuators,
Fig. 12 idealisiert-modellhaft die Stadienfolge I-V vom detektierten Strombedarf I über der Zeit t, in Zusammenschau mit Fig. 11 zwecks Verdeutlichung von einem Verfahren zur sensorlosen Erkennung eines rückwärtigen, zuspannkraftfreien, Feststellbremsaktuatorendanschlags und
Fig. 13 a-e die Einzelheiten der verbesserten, selbstausgleichenden Wälzlagerung, insbesondere zur Verwendung für querkraftbeaufschlagte Motorwellenlagerungen, Getriebewellenlagerungen oder Antriebsmutterlagerungen von elektromechanisch angetriebenen Feststellbremsaktuatoren.

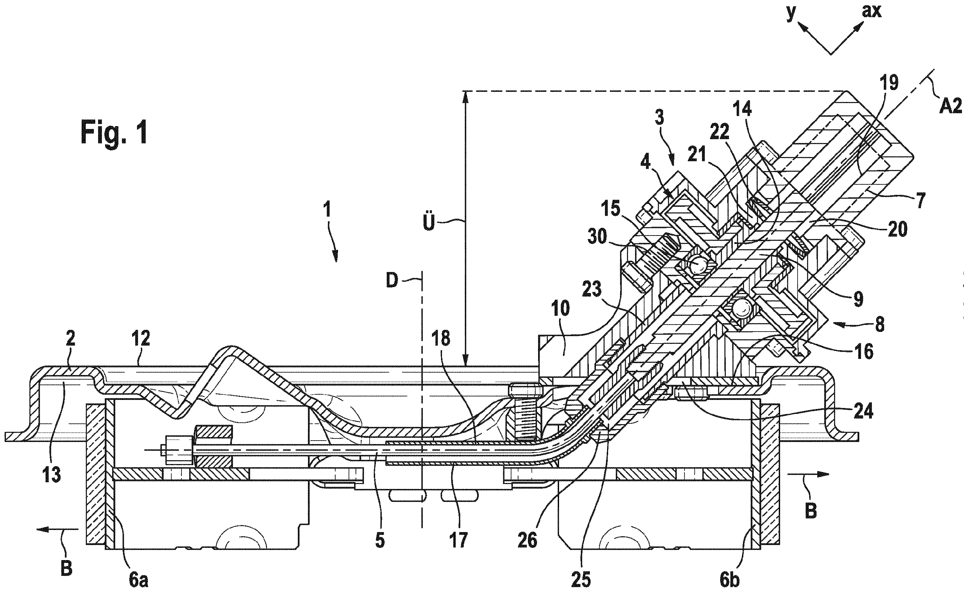

Ein bekanntes elektromotorisch betätigbares Trommelbremsmodul 1 zur Anordnung an Achsbauteilen eines Kraftfahrzeugs umfasst gemäß Fig. 1 eine Ankerplatte 2 mit daran gelagerten Bremsbacken 6a,b, die innerhalb einer nicht gezeichneten Bremstrommel auf einer Innenseite 13 vorgesehen sind. Auf einer gegenüber liegenden Seite (Außenseite 12) der Ankerplatte 2 ist ein elektromotorisch angetriebener Feststellbremsaktuator 3 befestigt, der über ein Getriebe 4 und einen nachgeschalteten Betätigungszug 5 derart an einer oder mehreren Bremsbacken 6a,b angreift, dass diese Bremsbacke (n) 6a,b eine Betätigungsbewegung B in Richtung auf die Bremstrommel ausführen können, um eine Betriebs- und/oder Feststellbremsfunktion auszuführen. Das Getriebe 4 umfasst ein Getriebegehäuse 8, das den Motor 7 (in der Zeichnung von der Spindelanordnung 9 überdeckt) aufnimmt oder trägt. Der Motor 7 konsumiert Gleichspannung, ist mechanisch oder elektronisch kommutiert, und von einem preiswert verfügbaren Standardtyp.

Die Fig. 1 zeigt eine Achse A1 von dem Motor 7 im Achsabstand X in den Zeichnungshintergrund zurückversetzt, also parallel deckungsgleich hinter der Achse A2 der Spindelanordnung 9 (im Zeichnungsvordergrund) . Die Achse A 2 mit der Spindelanordnung 9 stellt gewissermaßen den Abtrieb vom Antriebsstrang darstellt. Zwischen Feststellbremsaktuator 3 und Ankerplatte 2 ist ein Adapter 10 vorgesehen, um eine einfache Anpassung und Adaption an unterschiedliche Raum- und Einbauverhältnisse in einem Kraftfahrzeug zu ermöglichen. Der Adapter 10 ist einstückiger Bestandteil vom Getriebegehäuse 8, oder ein gesondertes Bauteil. Eine weitere Besonderheit besteht darin, dass der Feststellbremsaktuator 3 entgegen der Vorwärts-Fahrtrichtung eines Fahrzeugs, also bezogen auf die Vorwärts-Fahrtrichtung hinter einer Radnabe, etwa in 3-Uhr Stellung bezogen auf die Radnabe, sowie dicht an der Ankerplatte 2 im Winkel angeordnet ist. Dadurch ergibt sich ein besonders guter Schutz des Feststellbremsaktuators 3 gegen Umwelteinflüsse, wie Bewitterung und Steinschlag. Die geringe Baulänge vom Feststellbremsaktuator mit geringem Überstand Ü (durch die Parallelität der Achsen A1, A2), und die Flexibilität vom Betätigungszug 5 ermöglichen grundsätzlich eine frei adaptierbare Platzierung an der Ankerplatte 2.

Zum Antriebs- und Getriebestrang nach Fig. 1 gehört ein mehrstufiges, insbesondere 2-stufiges Zahnradgetriebe als Momentenwandler vom Untersetzungstyp. Dabei ermöglicht das zweistufige Rädergetriebe ein Untersetzungsverhältnis in einem Bereich zwischen etwa 7:1 bis 25:1. Wenn das nachgeschaltete Hebelgetriebe im Bereich der Bremsbacken 6a,b eine Untersetzung von etwa 5:1 ermöglicht, wird ein Untersetzungsverhältnis von etwa 125:1 erzielt. Hinzu tritt eine zusätzliche Untersetzungswirkung von dem Rot-Trans-Wandler, was eine Gesamtuntersetzungswirkung über den gesamten Antriebsstrang in einer Größenordnung von mindestens etwa 250:1 ermöglicht. Durch diesen Getriebestrang sind die Kosten- und Leistungsanforderungen an den Motor 7 zusätzlich deutlich abgesenkt.

Der Feststellbremsaktuator 3 ist dabei als gesondert handhabbare Baueinheit auf einer Seite 12 der Ankerplatte 2 vorgesehen. Es ist möglich, den Rot-Trans-Wandler als Spindelanordnung 9 in das Getriebegehäuse 8 zu integrieren und in dem Getriebegehäuse verdrehsicher, leichtgängig sowie spielfrei zu führen.

Das Getriebegehäuse 8 ist mehrstückig gebaut. Das Getriebegehäuse 8 nimmt eine Mehrzahl von Getriebebauelementen auf, die primär zur Drehmomentwandlung (geringes Eingangsdrehmoment, hohes Ausgangsdrehmoment) dienen, und auch eine stromlose Feststellbremsfunktion mittels Selbsthemmung ermöglichen können. Achsen A1, A2 von Motor- und Getriebewellen sind deckungsgleich-parallel, in dem Achsabstand X versetzt, zueinander vorgesehen. Zumindest bestimmte Getriebebauelemente können zumindest teilweise kostengünstigen Kunststoffwerkstoff aufweisen. Bevorzugt ist stromlose Selbsthemmung in dem Rot-Trans-Wandler (Spindelanordnung 9) vorgesehen, so dass der Rest vom Getriebestrang prinzipiell von den Zuspannkräften weitestgehend entlastet ist.

Gemäß Fig. 1 nimmt das Getriebegehäuse 8 zumindest teilweise zusätzlich eine Rot-Trans-Wandlerbaugruppe mit der Spindelanordnung 9 zur Wandlung der rotatorischen Antriebsdrehbewegung in eine translatorische Abtriebsbewegung auf. Folglich ist der Wandler zur raumsparenden Integration in die bekannten Trommelbremsanordnungen kostengünstig und platzsparend (verdichtet) in einer Schnittstelle zwischen Feststellbremsaktuator 3 und Ankerplatte 2 eingefügt und dennoch im Getriebegehäuse geführt, so dass für eine Umrüstung auf die elektromechanische Feststellbremsaktuatorik irgendwelche Änderungen an der Trommelbremsmechanik, insbesondere an dem Hebelgetriebe oder an der Ankerplatte 2, gar nicht notwendig sind.

Der Kraftfluss der Bremsbetätigungskraft ist - wie in Fig. 1 verdeutlicht - folgendermaßen. Ausgehend von Bremsbacke 6a,b und Betätigungszug 5 gelangt die Zugkraft über Spindelanordnung 9, Antriebsmutter 14, Lager 15 in die Ankerplatte 2. Das Lager 15 ist mit Vorteil als reibungsarmes Wälzlager (Schräg-, Schulter-, Axial- oder Rillenkugellager) ausgelegt. Das beschriebene Lager 15 ermöglicht auch eine radial gerichtete Lagerung für die Antriebsmutter 14. In Abwandlung der Gestaltung, kann für eine besonders präzise, kippresistente Abstützung der Antriebsmutter 14 jeweils ein antriebsseitiges und zusätzlich ein abtriebsseitiges Lager vorgesehen sein, ohne die Erfindung zu verlassen.

Eine Führung 17 und Umlenkung von dem Betätigungszug 5 ist weitgehend reibungsfrei ausgebildet, indem eine Schmierstoffbeschichtung und/oder sorgfältig abgerundete Verlegung vom Betätigungszug 5 mit oder ohne Hülle 18 vorgesehen ist. Dabei ist eine Abdichtungsmaßnahme auf die konkrete Konstruktion von dem Betätigungszug 5, mit oder ohne Hülle 18, abzustimmen.

Die Spindelanordnung 9 steht mit der Antriebsmutter 14 in Eingriff, und ist in dem Getriebegehäuse 8 verdrehsicher sowie axial verschiebbar geführt platziert. Zu diesem Zweck weist ein Getriebegehäusedeckel vom Getriebegehäuse 8 eine prismatische oder zylindrische Führung 19 mit wenigstens einem oder mehreren angepassten Kulissenelementen auf, welche als formschlüssig wirksames Mittel zur Führungs- und Verdrehsicherungsfunktion beitragen. Um eine günstige elektrische Abschaltung vom Feststellbremsaktuator 3 zu ermöglichen, ist die Spindelanordnung 9 mit einem Anschlag 20 versehen, der zur Anlage an einem gehäuseseitigen Widerlager 21 dient. Weiterhin ist zwischen Widerlager 21 und Anschlag 20 wenigstens ein Elastoelement 22 vorgesehen. Das Elastoelement 22 ist bevorzugt als Tellerfederanordnung ausgebildet, die eine steife Federkennlinie bei geringem Platzbedarf ermöglicht. Dies ermöglicht in Verbindung mit Messung und Beobachtung vom Strombedarf des Motors 7 eine günstige und frühzeitige automatische elektrische Abschaltung durch die Steuereinheit 53.

Die besonders verdichtete Feststellbremsaktuatorbauweise beinhaltet, dass die Spindelanordnung 9 zumindest teilweise in einem Stutzen 23 vom Getriebegehäuse 8 verschiebbar geführt aufgenommen ist. Der Stutzen 23 ist in Relation zu einer Durchgangsöffnung 24 der Ankerplatte 2 zentriert angeordnet. Vorzugsweise durchgreift der Stutzen 23 die Durchgangsöffnung 24 derart, dass zumindest ein Teil von der Spindelanordnung 9 in das Innere von der Bremstrommel verschoben werden kann. Dies dient auch einer automatischen Zentrierung vom Betätigungszug 5.

Der Feststellbremsaktuator 3 ist vollständig gegen das Eindringen von Fremdmedien (Schmutz, Abrieb, Flüssigkeit) oder das Austreten von eingefülltem Schmiermittel geschützt. Zur Abdichtung von dem Getriebegehäuse 8 ist dazu im Bereich von einer Austrittsöffnung 25 des Betätigungszugs 5 wenigstens ein Dichtungselement 26 vorgesehen.

Die nachstehende Erläuterung beschränkt sich auf die Beschreibung der Unterschiede der vorliegenden Erfindung. Mit der Fig. 1 weitestgehend übereinstimmende Merkmale sind in den übrigen Figuren mit übereinstimmenden Bezugsziffern gekennzeichnet.

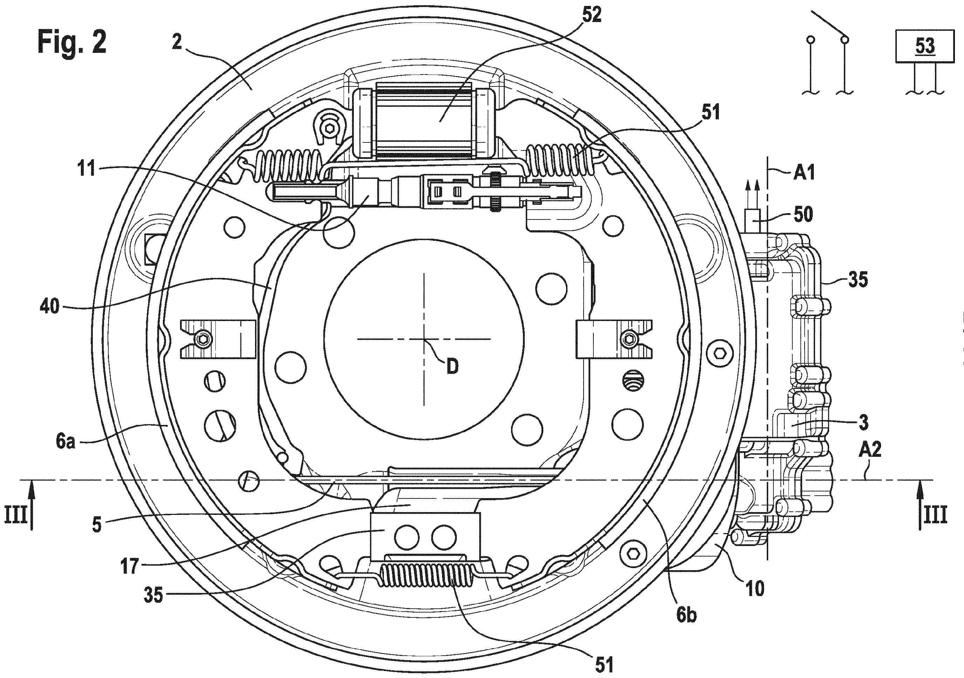

Wie aus Fig. 2 erhellt, interpretiert das kombiniert betätigbare Trommelbremssystem sowohl per Radbremszylinder 52 nachgefragte Betriebsbremswünsche als auch per elektromechanischer Feststellbremsaktuatorik nachgefragte Feststellbremswünsche. Die Betriebsbremsfunktion wird dabei vom hydraulischen Radbremszylinder 52 direkt auf beide Bremsbacken 6a,b übertragen, deren Lösestellung in Bezug auf einen nicht gezeigten Bremsrotor (Bremstrommel) einerseits von der teleskopierbaren Abstützvorrichtung 11 und andererseits von einem Abstützbock 35 definiert ist, und wobei Federelemente 51 die Bremsbacken 6a,b grundsätzlich aufeinander zu vorspannen. Die Feststellbremsfunktion, einschließlich stromlose Selbsthemmung, wird vom Feststellbremsaktuator 3 über einen Hebelarm 40 auf die Bremsbacken 6a,b aufgeprägt. Der Feststellbremsaktuator 3 ist auf der Außenseite 12 an der Ankerplatte 2 platziert.

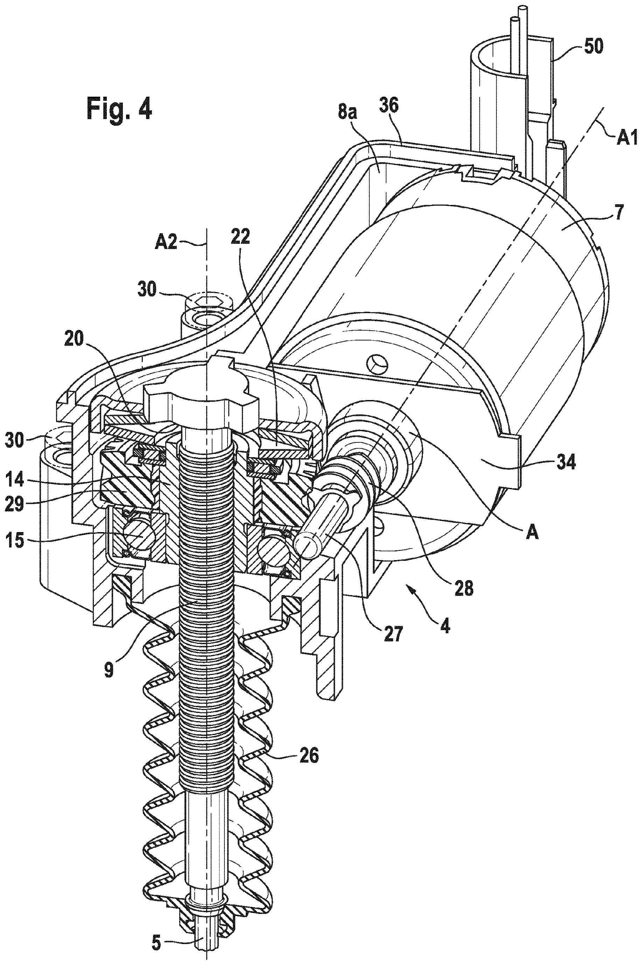

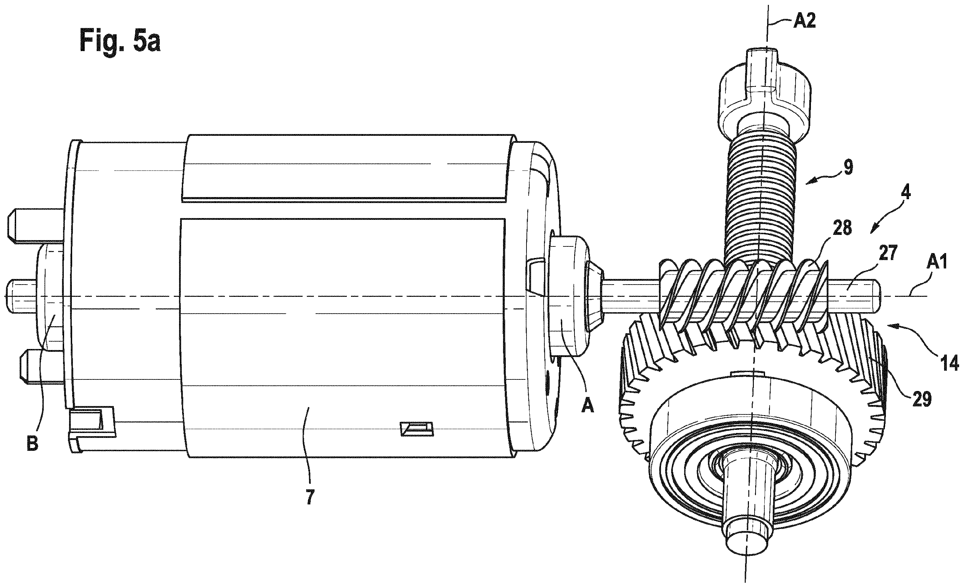

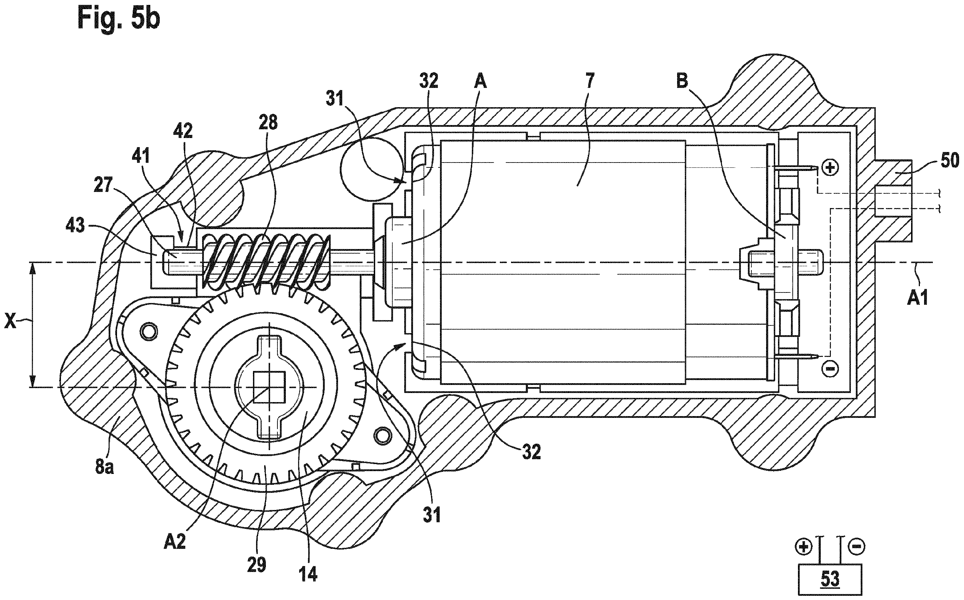

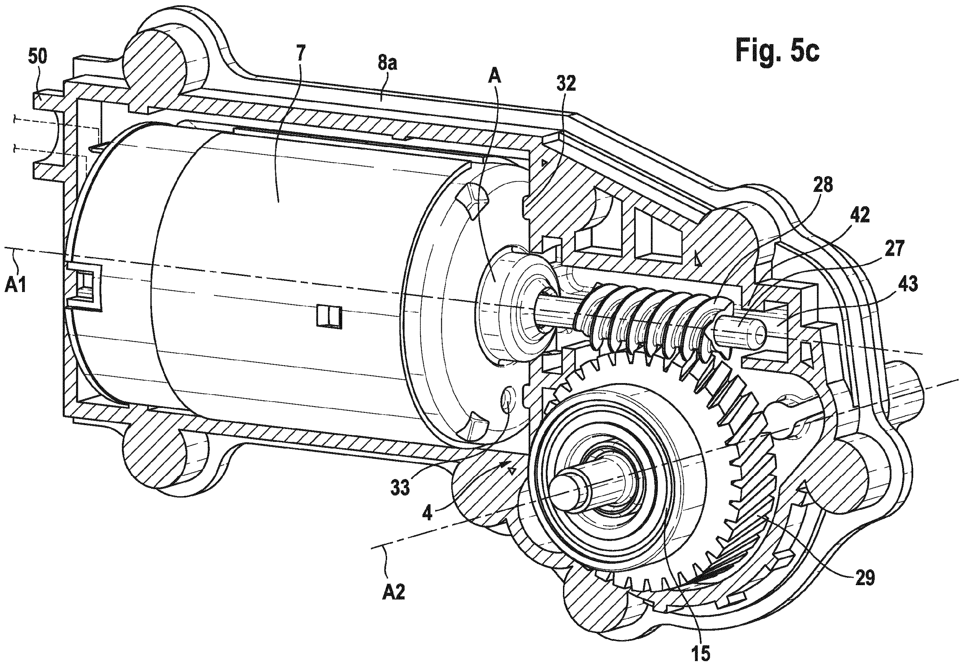

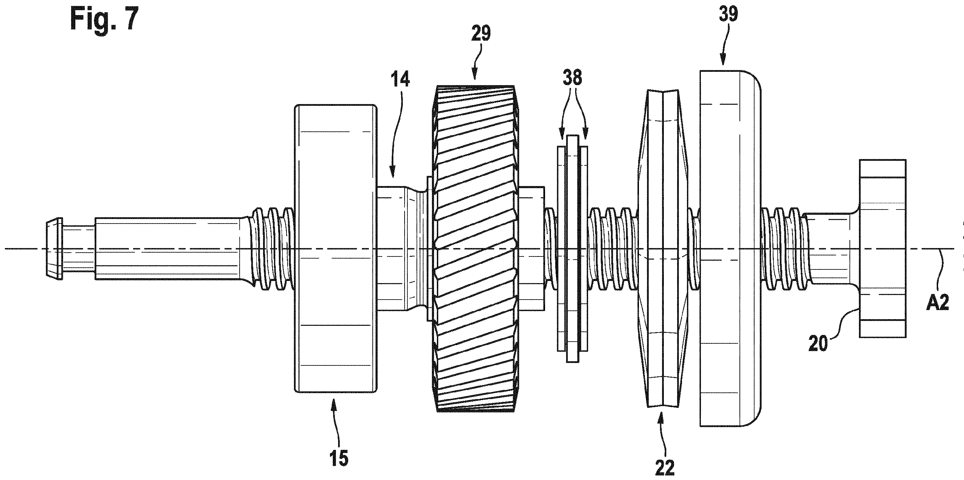

Die Fig. 4-8 lässt den modular in nur zwei Unterbaugruppen aufgeteilten beweglichen Trakt vom Getriebe 4 erkennen, der antriebsseitig die Achse A1 einschließlich Motor 7, das freie Motorwellenende 27 und das drehfest aufgeprägte Schraubradritzel 28 umfasst. Abtriebsseitig dominiert eine Achse A2 der Spindelanordnung 9 (der Abtrieb) . Diese ist zwecks Umlenkung in weitgehend rechtem Winkel (≈ 90°) versetzt sowie mit definiertem Achsabstand X zu der Achse A 1 arrangiert. Demzufolge rationalisiert die vorliegende Erfindung vorbekannten Planeten- und Stirnradgetriebeaktuatoriken, welche hochpräzise ausgeführte sowie tolerierte Zahneingriffe im Mikrobereich, einschließlich hochpräzise tolerierte (Getriebegehäuse-)Achsabstände zwischen zueinander parallel ausgerichteten Achsen, erfordern. Vielmehr ist eine einzige einfache, einstufige Schraubradgetriebestufe definiert, deren Achse A1 vertikal, also orthogonal zur Raddrehachse D ausgerichtet ist. Die Achse A2 ist demgegenüber schief zur Raddrehachse D ausgerichtet, und wobei der Betätigungszug 5 zumindest auf der Innenseite 13 der Ankerplatte 2 entlang einer Raumkurve R gekrümmt umgelenkt sowie im Übrigen weitgehend horizontal geführt vorgesehen sein darf.

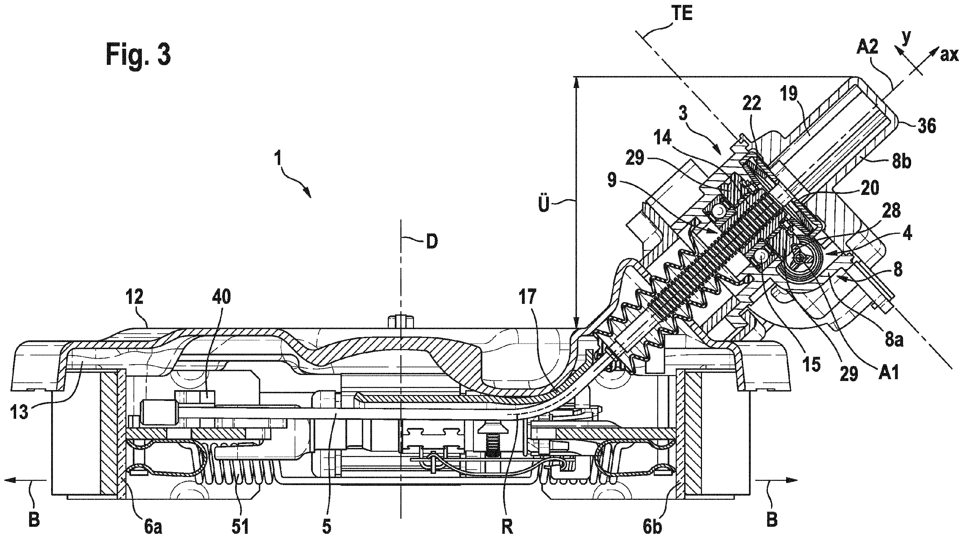

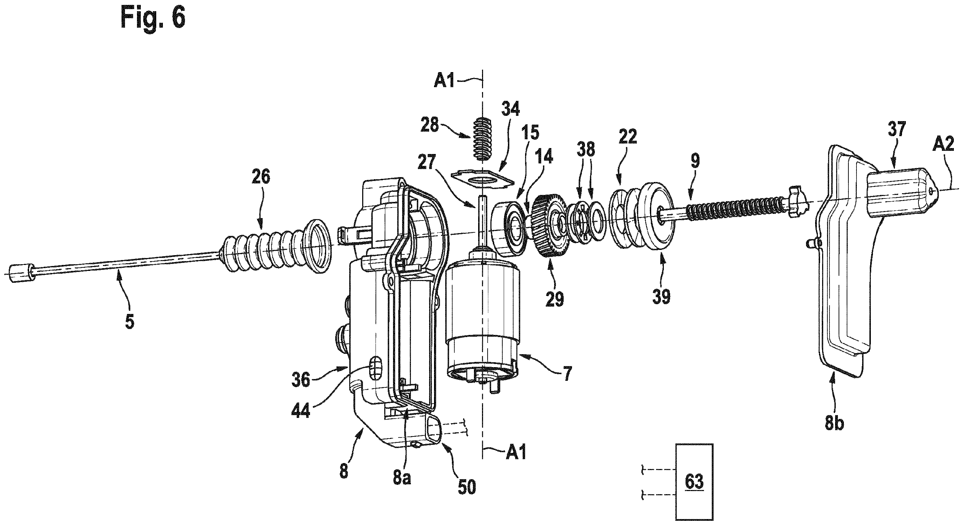

Wie insbesondere die Figuren 3 + 6 erkennen lassen, ist das Getriebegehäuse 8 besonders rationell 2-stückig aus einer wannenförmigen Getriebegehäuseunterschale 8a mit Schnittstelle zur drehfesten Anordnung an der Ankerplatte 2 und mit einem Getriebegehäusedeckel 8b mit einer einheitlichen Teilungsebene TE ausgebildet, welche parallel zur Achse A1 und orthogonal zur Achse A2 gerichtet arrangiert ist. Dabei bildet die Getriebegehäuseunterschale 8a vom Getriebegehäuse 8 zwecks Aufnahme vom Motor 7 eine integrale Motoraufnahme mit elektrischer Schnittstelle (vorzugsweise 2-Pol-Buchse) 50 aus, und wobei das Motorgehäuse sowohl drehfest als in Querkraftrichtung im Getriebegehäuse 8 aufgenommen ist. Dabei bildet die Motoraufnahme zwecks Abdichtung einen eigenständigen, abgetrennten, abgedichteten Einbauraum im Getriebegehäuse 8 aus, so dass das Motorinnere, Lager, Kommutator oder ähnliche Bauteile nicht durch Fremdmedien wie beispielsweise Spritzwasser, Öl, Fett oder Partikel verunreinigt oder geschädigt werden können. Im rechten Winkel zur Motoraufnahme, also orthogonal zum Motordom 36 v-förmig abgekröpft ausgerichtet, erstreckt sich ein Getriebedom 37, welcher die translatorisch verschiebare Spindel der Spindelanordnung 9 über eine Führung 19 drehfest lagert, und wobei die Achsen A1, A2 weitgehend rechtwinklig sind. Dabei ist es zielführend, wenn der Getriebedom 37 im Getriebegehäuse 8 einen eigenständig abgetrennten, gegen Fremdmedien abgedichteten, Einbauraum für die Spindelanordnung 9 begrenzt. Es ist erkennbar, dass der Getriebedom 37 primär als einstückiger Vorsprung vom Getriebegehäusedeckel 8b ausgestaltet ist. In Zusammenschau mit Fig. 2 und 4 wird deutlich, dass das Schnittstellenarrangement im Gesamtkontext so ist, dass sämtliche Schnittstellen (elektrische + hydraulische Schnittstelle, insbesondere hydraulische Rohrleitung sowie Verkabelungen, wie insbesondere Feststellbremsaktuatorleitungen und Sensorleitungen) sehr montagefreundlich zusammengefasst in einem geschützten Sektor oberhalb von der Raddrehachse D beispielsweise auf 2-Uhr-Position der Ankerplatte 2 konzentriert sind, wodurch nebenbei auch eine Montageerleichterung beim Fahrzeughersteller ermöglicht werden kann.

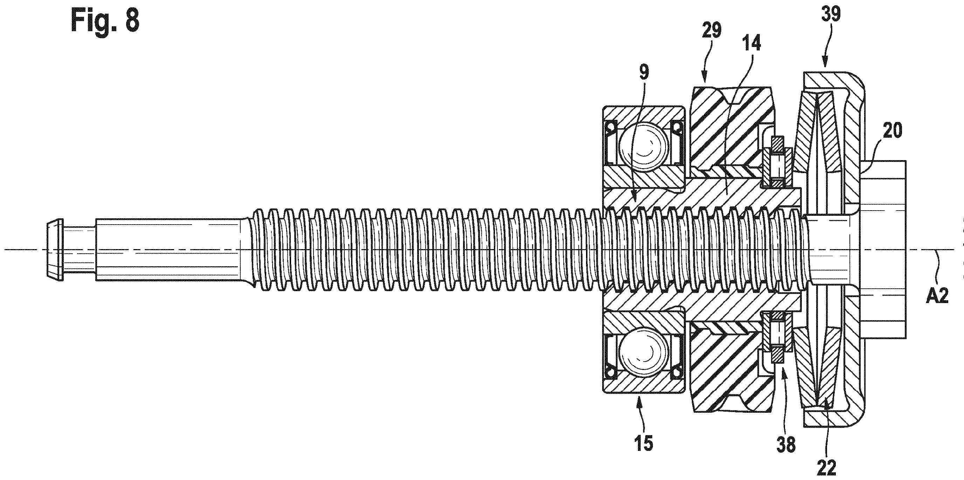

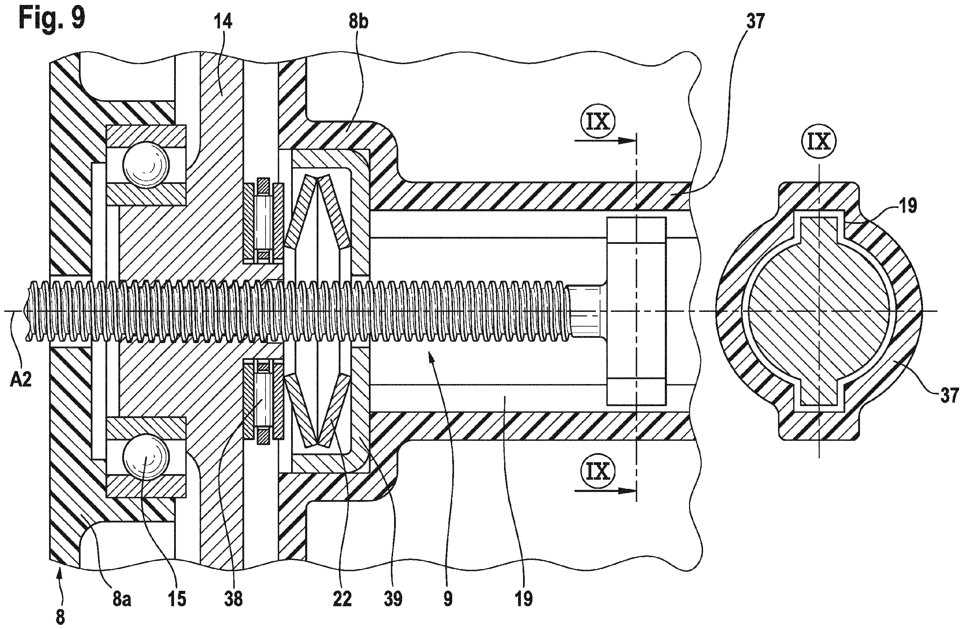

Der Antriebsstrang umfasst in Vereinfachung bei erhöhtem Wirkungsgrad (reduzierte mechanische Verluste) und hoher Laufruhe die einzige Rädergetriebestufe, nämlich Schraubradgetriebestufe, die lediglich das Schraubradritzel 28 und ein damit kämmendes, schrägverzahntes Schraubrad 29 umfasst. Das Schraubradritzel 28 ist in der dargelegten Ausführungsform dreigängig gewunden sowie drehfest auf das freie Motorwellenende 27 von der Motorwelle aufgepresst. Die Lagerung vom Schraubradritzel 28 ist fliegend sowie mittelbar über die Motorwellenlagerung im Motorgehäuse gelöst, so dass Radialkräfte sowie aus der Verzahnung resultierende Axialschubkraftanteile beim Zuspannvorgang über Schraubradeingriff und Motorwelle in zwei Motorwellenlager (A-Lageraufnahme in Festlagerausbildung im Lagerschild der Bürstenhalteplatte, B-Lageraufnahme in Loslagerausbildung im Motortopfboden, oder umgekehrt) schließlich ins Getriebegehäuse 8 abgeleitet werden. Die Motorwellenlagerung erfordert demnach zumindest ein Wälzlager, welches sowohl Radial- als auch Axialschubkräfte aufzunehmen vermag. Der Lagerung der Spindelanordnung 9 im Getriebegehäuse 8 dient ein Lager 15 nämlich Kombiwälzlager, insbesondere Rillenkugellager, welches sowohl Axialkräfte als auch Radialkräfte in das Getriebegehäuse 8, insbesondere die Getriebegehäuseunterschale 8a zu übertragen vermag. Das Kombiwälzlager ist über seinen Lageraussenring in einem Sitz in einer Aufnahme vom Getriebegehäuse 8 aufgenommen und fixiert. Dazu ist das schrägverzahnte Schraubrad 29 vorzugsweise aus Kunststoff und drehfest mit der metallischen Antriebsmutter 14 verbunden (Fig. 8) oder alternativ metallisch einstückig damit ausgebildet (Fig 9) . Zur axial festen, gemeinsamen Drehlagerung von Schraubrad mit Antriebsmutter 14 im Getriebegehäuse 8 dient ein Lagerzapfen der das Kombiwälzlager so trägt, dass sowohl die Radialkraftanteile als auch die axial gerichteten Schubkraftanteile, die aus der Schrägverzahnung resultieren, in das Getriebegehäuse 8 eingeleitet werden.

Der Prozess der modularen Endmontage von Unterbaugruppen und Komponenten geht besonders deutlich aus der Fig. 6 hervor. Diese umfasst in ihrer Montagereihenfolge folgende Schritte + Unterbaugruppen:
1.) Bereitstellen und Fixieren vom Getriebegehäuse 8 mit wannenförmiger Gehäuseunterschale 8a incl. Ankerplattenschnittstellen, Getriebegehäusedeckelzentierung, Motordom 36 mit Schottwand und (pneumatisch wirksamer, wasserdichter) Druckausgleichsvorrichtung in Gestalt einer Membran 44 sowie elektrischer Schnittstelle 50;
2.) Einfügen vom Motor 7 inklusive elektrischer Kontakte und wellenfestem Schraubradritzel 28 in die Getriebgehäuseunterschale 8a;
3.) Herstellung einer elektrischen Kontaktierung zwischen elektrischer Schnittstelle 50 und Motorkontakten (durch verlöten, verschweißen, vercrimpen, schneidklemmen von Kontaktfahnen)
4.) Einfügen der Spindelanordnung 9 mit Betätigungszug 5, Spindel, Antriebsmutter 14, Axiallager 38 und Elastoelement 22 in die Getriebegehäuseunterschale 8a. Paarung von Schraubradritzel 28 und Schraubrad 29;
5.) Ausrichtung, Auflage und Fixierung vom Getriebegehäusedeckel 8b mit Getriebegehäusedeckelzentrierung(en) und Getriebedom 37 an der Getriebegehäuseunterschale 8a, wobei die Teilungsebene TE (Getriebegehäuseteilung) orthogonal zur Achse A2 gerichtet ist.

Die Fig. 6-9 beziehen sich auch auf eine Hardwarekonfiguration zur verbesserten elektrischen Regelung eines Feststellbremssystems (zwecks sensorloser Erkennung eines rückwärtigen, zuspannkraftfreien Endanschlags). Fig. 6-9 verdeutlicht eine verbesserte und selbsthemmend ausgelegte Spindelbaugruppe 9 unter Verwendung von einem Elastoelement 22 zur sensorlos verbesserten Detektion vom gelösten Zustand (zuspannkraftfreie Lösestellung). Dabei ist zudem eine verbesserte Baugruppenbildung unter bauraumsparender Lagerung von dem Elastoelement 22 in einer Aufnahme 39 ermöglicht. Das Elastoelement 22 ist zwischen Spindel und Antriebsmutter 14 so eingespannt vorgesehen, dass der Kraftfluss durch Elastoelement 22, Spindel und Antriebsmutter 14 ohne Einschaltung vom Getriebegehäuse 8 in sich geschlossen ist. Auch ist das Elastoelement 22 dadurch ein vormontierbarer Bestandteil von der Spindelbaugruppe. Dadurch liegt ein geschlossener Kraftfluss derart vor, dass die dem Elastoelement 22 von der Spindelanordnung 9 aufgeprägten Kräfte mittelbar oder unmittelbar direkt vom Wälzlager in dem Getriebegehäuse 8 abgestützt sind. Demzufolge entfällt ein gesondertes Widerlager mit Anschlag im Getriebegehäuse 8. Der Kraftfluss erfolgt in der Ausführungsform über Spindel, Elastoelement 22, Axiallager(scheibe) 38, Antriebsmutter 14, Lager 15 (Wälzlager) und Getriebegehäuse 8 in die Ankerplatte 2. Zudem ist durch diese neuartige Kraftflussführung ermöglicht, dass das Elastoelement 22, gemeinsam mit Axiallager 38, Antriebsmutter 14 und der Aufnahme 39 vom Elastoelement 22 als baugruppenartig vormontierter Bestandteil von der Spindelanordnung 9 vorliegt. Alternativ kann das Wälzlager komplett vormontiert im Getriebegehäuse 8 vorliegen, und die vormontierte Spindelbaugruppe 9 wird in den Lagerinnenring vom Wälzlager eingesetzt. Weiterhin alternativ ist es möglich, dass das Wälzlager geteilt ausgebildet ist, und wobei der Wälzlageraussenring im Getriebegehäuse 8 vormontiert vorliegt, wohingegen Wälzlagerinnenring mit Wälzkörpern sowie vorzugsweise einem Wälzkörperkäfig einen vormontierten Bestandteil der Spindelanordnung 9 darstellt. Jedenfalls ist die Spindelanordnung 9 mitsamt Elastoelement 22 über den Wälzlageraussenring im Getriebegehäuse 8 gelagert und zentriert. Dem Elastoelement 22 kann die Aufnahme 39 als Zentrier- und Montagehilfe zugeordnet sein, die ein Bestandteil von der Spindelbaugruppe 9 ist. Die vorstehende, neuartige Definition von zentral vormontagefähigen Schlüsselkomponenten bei stark reduzierter Komponenten- und Bauteilanzahl prädestiniert den Feststellbremsaktuator 3 zur kostengünstigen und dennoch einfach mengenskalierbaren Endmontage sowohl in Verbindung mit manuell gefertigter Kleinserie als auch in Verbindung mit robotergerechter Großserienmontage.

Es ist hinzuzufügen, dass das Elastoelement 22 auch eine Zusammenschaltung mehrerer Einzelfedern umfassen kann, die per Montagehilfe als Verkapselung, Verklammerung, per Käfig oder sonstige Bündelungsmaßnahme zusammen gefügt und/oder elastisch vorgespannt sein können. Zwecks Bauraumeinsparung wird daher die Verwendung von Tellerfedern empfohlen.

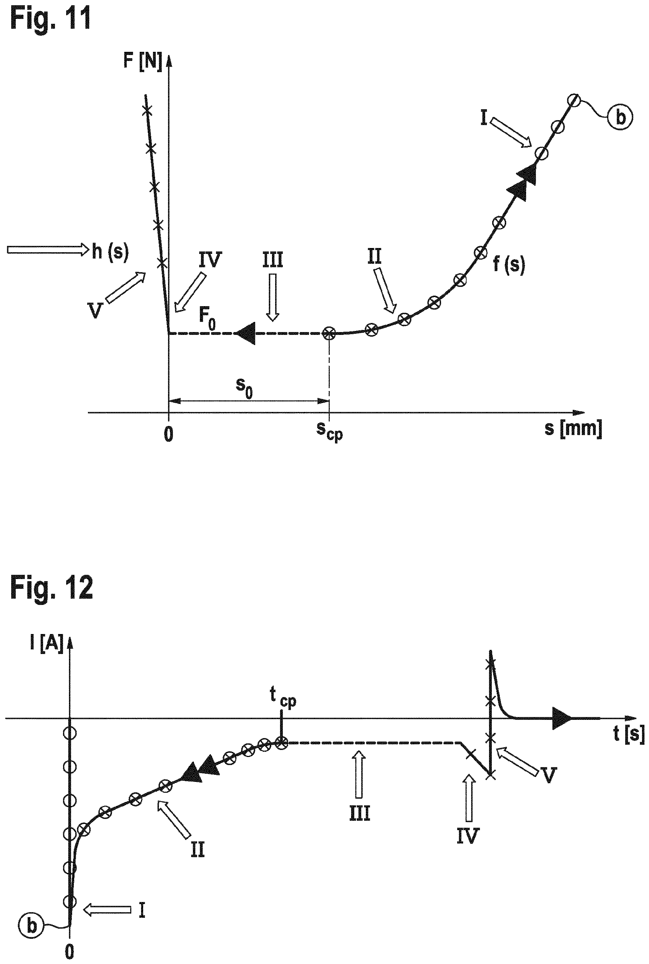

Weitere Aspekte sind anhand von Fig. 11 + 12 illustriert und beziehen sich auf ein Betriebsverfahren für einen elektrischen Feststellbremsaktuator 3. In den jeweils modellhaft-idealisierten Kennlinienverläufen ist ein elektromechanischer Zuspannprozess anhand von einem Doppelpfeil gekennzeichnet, während ein elektromechanischer Löseprozess in die umgekehrte Richtung per einfachem Pfeil symbolisiert ist. Dabei ist die Spindel vom Feststellbremsaktuator 3 jeweils in den gestrichelt (rot) oder mit Kreuzen (grün) gekennzeichneten Kennlinienabschnitten zugkraftfrei. Ausschließlich in dem mit Kreuzen (grün) markierten Kennlinienbereich ist das Elastoelement 22 wirksam. Demzufolge wirkt das Elastoelement 22 in Abhängigkeit vom zurückgelegten Stellweg s als ein elastisch in den Kraftfluss der Lagerkräfte eingebundener Endanschlag mit der Folge, dass eine sensorlos detektierbare Kennlinienänderung im Strom-Zeitverlauf vorliegt, die von der Steuereinheit 53 durch Beobachtung vom Stromverlauf verarbeitet und verwertet wird. Dies wird im Einzelnen dadurch bewirkt, dass die Spindel mit Beginn der Phase IV sowie in der Phase V zunehmend von dem Elastoelement 22 beaufschlagt ist. Ein anderer Kennlinienbereich, welcher in der Figur 11 + 12 jeweils mit Kreisen verdeutlicht ist, betrifft demgegenüber den zugkraftbeanspruchten Stellbereich von der Feststellbremsaktuatorik. Ein Löseprozess wird, jeweils ausgehend vom Betätigungszustand b und in die Löserichtung betrachtet, also ganz grundsätzlich in die folgenden Prozessphasen aufgeteilt:
- Phase I:: Motoranlauf in Löserichtung (Bestromungsbeginn)
- Phase II:: Kraftabbau in Löserichtung
- Phase III:: Leerlauf in Löserichtung
- Phase IV:: Angriff am Elastoelement
- Phase V:: Aktionsende (Bestromungsende)

Es versteht sich, dass ein Zuspannprozess genau umgekehrt abläuft.

Aus Fig. 11 geht ein (Zug-)Kraftverlauf F über dem Feststellbremsaktuatorstellweg s hervor. Dabei verdeutlicht ein Kennlinienzweig f(s) prinzipiell einen kräftemäßigen Zusammenhang zwischen Spindel und Betätigungszug, also den Zweig der Zugkraftausübung zwischen Spindel und Betätigungszug 5. Dieser Kennlinienzweig ist im Wegintervall des (zugkraftfreien) Leerwegs gestrichelt (rot) sowie im zugkraftbeanspruchten Wegintervall mit Kreisen (blau) markiert. Umgekehrt verdeutlicht ein Kennlinienzweig h(s), der jenseits vom 0-Punkt vorliegt, und zudem mit Kreuzen (grün) markiert ist, eine Kraftwirkung vom Elastoelement 22 in Bezug auf die Spindel. Diese Kraftwirkung tritt nur in einem Intervall zwischen dem Überfahren vom 0-Punkt und dem Erreichen vom hinteren Endanschlag auf. Diese Kraftwirkung vom Elastoelement 22 ist der Lösebewegung der Spindel entgegen gerichtet.

Wie aus Fig. 11 im Detail erhellt, überwindet die Feststellbremsaktuatorik entsprechend dem gestrichelt (rot) verdeutlichten Kennlinienteil beim Zuspannen mit der Phase III einen Leerweg s0 im Wesentlichen kraftfrei (F0). Mit dem Erreichen der Wegmarke scp wird in der Phase II Stellkraft (Zugkraft) aufgebaut. Zur Regelung wie insbesondere zur Ein- und Abschaltung der Bestromung dient die elektronische Steuereinheit 53. Sowohl beim Zuspannen als auch beim Lösen vom Feststellbremsaktuator wird der elektrische Stromverlauf von der Steuereinheit 53 beobachtet, um zu Detektieren, ob einerseits die geforderte Zuspannkraft erreicht ist, oder andererseits der Lösezustand sicher erreicht worden ist, bevor die Feststellbremsaktuatorbestromung beendet wird.

Die Steuereinheit 53 beinhaltet einen Mikroprozessor mit Speicher und geht nach einer EDV-gestützten sowie softwarebasierten zyklisch ausgeführten Regelroutine anhand von einem softwarebasiert hinterlegten physikalischen Systemmodell davon aus, dass das Trommelbremssystem immer dann sicher in die Lösestellung transferiert ist, wenn die Bremsbacken 6a,b ihre zuspannkraftfreie Lösestellung erreicht haben. Diese ist erreicht, wenn die Bremsbacken 6a,b nun noch unter der Wirkung der vorgespannten Federelemente 51 also zuspannkraftfrei aber dennoch definiert auf der Abstützvorrichtung 11 aufliegen. Die Steuereinheit 53 detektiert daher entsprechend dem genannten Modell die Phase V nachdem Phase III, also das zuspannkraftfreie Leerlaufniveau, bewältigt ist, und auch die Phase IV abgeschlossen wurde. Demzufolge wird überwacht und entsprechend erkannt ob der Feststellbremsaktuatorstrombedarf als Antwort auf das Ende der Phase IV merklich sowie reproduzierbar abgesichert ansteigt. Mit anderen Worten wird die Besonderheit herangezogen, dass beim Einfahren des Feststellbremsaktuators 3 in seine "hintere" sicher gelöste Endposition - also die Lösestellung jenseits vom 0-Punkt - durch elastische Verformung vom Elastoelement 22 eine linear oder progressiv ansteigende, deutliche, Änderung im Verlauf der Strom-Zeit-Kennlinie eingeprägt wird. Dieser Tatbestand wird durch Kennlinienbeobachtung von der Steuereinheit 53 automatisch überwacht und erkannt. Nach Erkennung wird die Stromversorgung des Feststellbremsaktuator 3 automatisch durch die Steuereinheit 53 abgeschaltet, ohne dass Trägheitseffekte im Antriebsstrang vom Feststellbremsaktuator 3 noch irgendwelche komfortbeeinträchtigenden Effekte (Nachlauf) erzeugen könnten. Nach Abschaltung der Bestromung verharrt der Antriebsstrang vom Feststellbremsaktuator 3 augenblicklich, infolge Selbsthemmung in der erreichten Lösestellung.

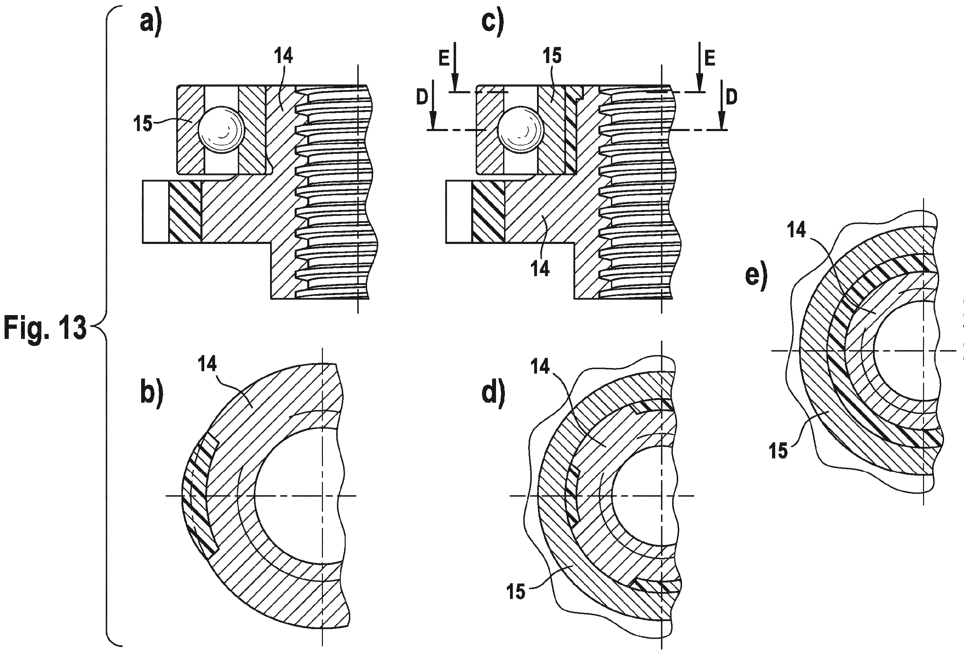

Wesentliche Aspekte gehen aus Fig. 13 hervor, wobei Fig. 13 a) eine konventionelle Lagerausbildung beschreibt. Sondermaßnahmen im Bereich von einem speziell ausgebildeten Lagersitz für einen effektiven Ausgleich und/oder Selbstzentrierung unter hohen Aktuatorkräften bei gleichzeitig ausreichender Linearführungsqualität ergeben sich auf Fig. 13 b -Fig. 13 e anhand der entsprechend verdeutlichten Antriebsmutter 14 mit montiertem Wälzlager 15. Prinzipiell ist die Antriebsmutter 14 vollständig aus Metallwerkstoff fertigbar. Es ist aber auch möglich, dass die Antriebsmutter 14 einen metallischen Trägerkörper für Wälzlagerring und einen Zahnkranz ausbildet, und wobei der Zahnkranz aus Kunststoffwerkstoff drehfest auf den metallischen Trägerkörper aufgebracht ist. Insoweit ist zwischen Zahnkranz und Trägerkörper bereits eine gewisse Elastizität ausbildbar. In diesem Zusammenhang kann ein Lagerzapfen an der Antriebsmutter (beziehungsweise Trägerkörper) oder dementsprechend eine Lagerbohrung in einem Getriebegehäuse 8 (welches ebenfalls als Trägerkörper für einen zugeordneten Wälzlagerring wirksam sein kann) unter Vereinfachung der Fertigung einen besonders ausgebildeten, quasielastischen Lagersitz aufweisen, der zudem Deplatzierung, Ungenauigkeit, elastische Deformation und Winkelfehler zwischen den gepaarten Bauteilen toleriert und ausgleicht. In diesem Zusammenhang wird die beispielhaft in der Zeichnung erläuterte Kombiwälzlagerausbildung vorgeschlagen. Der mitdrehende Lagerinnenring vom Kombiwälzlager empfängt aus der Schrägverzahnung vom Schraubradgetriebe Umfangslast. Der drehfeste Lageraussenring vom Kombiwälzlager erhält von den Wälzkörpern Punktlast aufgeprägt. In Problemlösung wird vorgesehen, dass der metallische Lagerinnenring nicht einfach unmittelbar direkt sowie metallisch starr auf einem hochgenau gefertigten Lagerzapfen des zylindrisch geschliffenen Lagersitz von der Antriebsmutter 14 aufsitzt. Vielmehr ist der Lagersitz mit definierter Elastizität versehen, was zumindest geringfügige Elastizität also Nachgiebigkeit erlaubt. Bei der Ausführungsform nach Fig. 13 e ist der Trägerkörper daher mit einer rohrförmig durchgehenden, zylindrisch-umlaufenden, elastischen, nichtmetallischen Verkleidung nämlich der Zwischenlage versehen, die den Wälzlagerinnenring trägt. Grundsätzlich ist die Zwischenlage drehfest mit dem jeweiligen Trägerkörper verbunden. Dabei kann die Zwischenlage über einstückig angeformte Mitnehmer verfügen, die formschlüssig am Trägerkörper angreifen. Die Mitnehmer können als besondere Profilierung vorliegen. Der Ausgestaltung nach Fig. 13 c ist ein Mitnehmer entnehmbar, der am axial äußeren Ende als partiell stufenförmig verdickter Absatz von der Zwischenlage ausgebildet ist, und nach radial innen weist.

In der Ausgestaltung nach Fig. 13 c und Fig. 13 d ist der Lagersitz auf dem Lagerzapfen beispielhaft als Trägerkörper gestaltet, der eine partiell unterschiedlich biegeweiche Zwischenlage unter Verwendung von einer Profilierung und einer quasielastischen Zwischenlage aus nichtmetallischem Werkstoff umfasst. Dazu kann der Trägerkörper eine Profilierung wie insbesondere eine Keilverzahnung, Nutanordnung oder ähnlich formschlüssige Arbeitsflächengestaltung mit Vorsprüngen und Kavitäten beinhalten, und wobei die Kavitäten mit radialem Übermaß mit dem Werkstoff von der quasielastischen Zwischenlage überzogen sind. Die örtliche Übermaßigkeit ist aus Fig. 13 b ersichtlich. Die Zwischenlage kann aus thermoplastischem Kunststoffwerkstoff ausgebildet sein, der auf den Trägerkörper aufgebracht, wie insbesondere aufgespritzt, ist. Insgesamt ist es auch möglich, dass am Lagersitzumfang regelmäßig verteilte, metallische Restauflagen verbleiben, die so dimensioniert sind, dass abwechselnd versetzte Zonen unter Presspassung (im Bereich der quasielastischen Zwischenlage) und Zonen unter metallischer Spiel- oder Übergangspassung ergeben. Zusammenfassend kann durch die quasielastische Lagerinnenringauflage ganz prinzipiell auf eine aufwändige Aussenbearbeitung infolge Rundschleifprozess am Lagerzapfen, und auch auf die Fertigung von einem besonderen Lagerfreistich im Übergang zur Antriebsmutter 14 verzichtet werden. Grundsätzlich entsprechendes gilt für den Entfall einer noch aufwändigeren Innenbearbeitung soweit ein Wälzlagersitz betroffen ist, welcher in eine Lagerbohrung einzubringen ist. Demzufolge sind die Fertigungskosten auch für dieses Anwendungsbeispiel abgesenkt. Die beschriebene Kompensationseigenschaft ermöglicht zudem einen geräuschgedämpften sowie komfortablen Systembetrieb, und wobei zusätzlich eine Genauigkeitsanforderung an die Verzahnungsfertigung absenkbar ist.

### Bezugszeichenliste:

- 1: Trommelbremsmodul
- 2: Ankerplatte
- 3: Feststellbremsaktuator
- 4: Getriebe
- 5: Betätigungszug
- 6: Bremsbacken
- 7: Motor
- 8: Getriebegehäuse
- 9: Spindelanordnung
- 10: Adapter
- 11: Abstützvorrichtung
- 12: Außenseite
- 13: Innenseite
- 14: Antriebsmutter
- 15: Lager
- 16: Auflagefläche
- 17: Führung
- 18: Hülle
- 19: Führung
- 20: Anschlag
- 21: Widerlager
- 22: Elastoelement
- 23: Stutzen
- 24: Durchgangsöffnung
- 25: Austrittsöffnung
- 26: Dichtungselement
- 27: freies Motorwellenende
- 28: Schraubradritzel
- 29: Schraubrad
- 30: Befestigungsmittel
- 31: Verdrehsicherung
- 32: Vorsprung
- 33: Aussparung
- 34: Zentrierbrille
- 35: Abstützbock
- 36: Motordom
- 37: Getriebedom
- 38: Axiallager
- 39: Aufnahme
- 40: Hebelarm
- 41: Notlager
- 42: Motorwellenaufnahme
- 43: Schmierstoffreservoir
- 44: Membran

- 50: Schnittstelle
- 51: Federelement
- 52: Radbremszylinder
- 53: Steuereinheit

- A1,A2: Achse
- ax: axial
- B: Betätigungsrichtung
- b: Betätigungszustand
- D: Drehachse
- F: (Zug)Kraft
- I: Strom(bedarf)
- R: Raumkurve
- r: radial
- s: Weg
- t: Zeit
- TE: Teilungsebene
- Ü: Überstand
- X: Achsabstand

- I,II,II,IV,V: Prozessphasen

## Patentansprüche

1. Elektrisches Trommelbremssystem mit Feststellbremsaktuator (3) für ein Kraftfahrzeug wobei der Feststellbremsaktuator (3) auf einer Außenseite (12) von einer Ankerplatte (2) angeordnet ist, und im Drehantrieb eine drehbar und axial fest an der Ankerplatte abgestützte Antriebsmutter (14) antreibt, die eine verdrehgesichert sowie axial verschiebbar in einem Getriebegehäuse (8) gelagerte Spindel einer Spindelanordnung (9) antreibt, die über einen Betätigungszug (5) an wenigstens einer Bremsbacke (6a,b) so angreift, dass diese eine Betätigungsbewegung in Richtung Bremstrommel oder eine umgekehrt gerichtete Lösebewegung ausführen kann, und mit wenigstens einer elektrischen Schnittstelle für eine elektrische Mensch-Maschine-Schnittstelle und/oder eine elektronische Steuereinheit, wobei eine Achse A1 entlang einer Motorwelle vom Motor (7) mit drehfest am freien Motorwellende (27) angekoppeltem Schraubradritzel (28) mit einer Achse A2 der Spindelanordnung (9) einschließlich drehfest mit der Antriebsmutter (14) gekoppeltem Schraubrad (29) etwa im rechten Winkel zueinander angeordnet und im Achsabstand X zueinander eine Schraubradgetriebestufe vom Feststellbremsaktuator (3) definieren, und **dadurch gekennzeichnet, dass** das Getriebegehäuse (8) eine wannenförmige Getriebegehäuseunterschale (8a) mit erhabenem Motordom (35) einschließlich elektrischer Schnittstelle (50) und einen Getriebegehäusedeckel (8b) mit erhabenem Getriebedom (36) aufweist, deren Achsen A1, A2 weitgehend rechtwinklig und mit definiertem Achsabstand X zueinander versetzt vorgesehen sind.

2. Elektrisches Trommelbremssystem mit Feststellbremsaktuator (3) für ein Kraftfahrzeug nach Anspruch 1, **dadurch gekennzeichnet, dass** die Achse A1 vertikal sowie lotrecht zu einer Raddrehachse D ausgerichtet ist.

3. Elektrisches Trommelbremssystem mit Feststellbremsaktuator (3) für ein Kraftfahrzeug nach Anspruch 1, **dadurch gekennzeichnet, dass** die Achse A2 windschief zur Raddrehachse D und windschief zur Ankerplatte (2) ausgerichtet ist, und wobei der Betätigungszug (5) zumindest auf der Innenseite (13) der Ankerplatte (2) entlang einer Raumkurve R gekrümmt umgelenkt sowie im Übrigen weitgehend horizontal geführt arrangiert ist.

4. Elektrisches Trommelbremssystem mit Feststellbremsaktuator (1) für ein Kraftfahrzeug, nach einem oder mehreren der vorhergehenden Ansprüche, **dadurch gekennzeichnet, dass** sämtliche Schnittstellen betreffend hydraulische Versorgung, elektrische Kabel etc. für die Trommelbremse gebündelt innerhalb von einem Halbkreissektor der Ankerplatte (2) arrangiert sind, welcher oberhalb von der Raddrehachse D angeordnet ist.

5. Elektrisches Trommelbremssystem mit Feststellbremsaktuator (3) für ein Kraftfahrzeug nach einem oder mehreren der vorhergehenden Ansprüche 1-4, **dadurch gekennzeichnet, dass** der Feststellbremsaktuator (3) eine einzige Rädergetriebestufe umfasst.

6. Elektrisches Trommelbremssystem mit Feststellbremsaktuator (3) für ein Kraftfahrzeug, nach einem oder mehreren der vorhergehenden Ansprüche, **dadurch gekennzeichnet, dass** der Feststellbremsaktuator (3) eine fliegende Lagerung vom Schraubradritzel (28) anhand der Motorwellenlagerung im Getriebegehäuse (8) umfasst.

7. Elektrisches Trommelbremssystem mit Feststellbremsaktuator (3) für ein Kraftfahrzeug nach Anspruch 6, **dadurch gekennzeichnet, dass** die Motorwellenlagerung zumindest ein Wälzlager umfasst, das sowohl Radial- als auch Axialschubkräfte aufnimmt.

8. Elektrisches Trommelbremssystem mit Feststellbremsaktuator (3) für ein Kraftfahrzeug nach einem oder mehreren der vorhergehenden Ansprüche, **dadurch gekennzeichnet, dass** die Motorwellenlagerung und die Lagerung der Spindelanordnung (9) im Getriebegehäuse (8) wenigstens zwei Wälzlager in Festlageranordnung umfassen, welche sowohl Axialkräfte als auch Radialkräfte übertragen.

9. Elektrisches Trommelbremssystem mit Feststellbremsaktuator (3) für ein Kraftfahrzeug nach den Merkmalen vom Anspruch 8, **dadurch gekennzeichnet, dass** wenigstens ein Wälzlager mit einem Lageraussenring in einem Sitz in einer Aufnahme der Getriebegehäuseunterschale (8a) aufgenommen und fixiert ist, so dass Radialkraftanteile als auch axial gerichtete Schubkraftanteile aus dem Verzahnungseingriff, direkt in die Getriebegehäuseunterschale (8a) eingeleitet werden.

10. Elektrisches Trommelbremssystem mit Feststellbremsaktuator (3) für ein Kraftfahrzeug nach einem oder mehreren der vorhergehenden Ansprüche 1-9, **dadurch gekennzeichnet, dass** zwischen Motor (7) und Getriebegehäuse (8), wie insbesondere der Getriebegehäuseunterschale (8a), wenigstens eine Verdrehsicherung (31) vorgesehen ist.

11. Elektrisches Trommelbremssystem mit Feststellbremsaktuator (3) für ein Kraftfahrzeug nach Anspruch 10, **dadurch gekennzeichnet, dass** eine formschlüssige Verdrehsicherung (31) wenigstens einen Vorsprung (32) wie insbesondere einen Nocken am Getriebegehäuse (8) umfasst, welcher in eine zugeordnete Aussparung (33) vom Motor (7) eingreift, oder umgekehrt.

12. Elektrisches Trommelbremssystem mit Feststellbremsaktuator (3) für ein Kraftfahrzeug nach einem oder mehreren der vorhergehenden Ansprüche, **dadurch gekennzeichnet, dass** dem Motor (7) im Bereich vom Schraubradgetriebe eine Zentrierbrille (34) gesondert zugeordnet ist, die in dem Getriebegehäuse (8) abgestützt ist.

13. Elektrisches Trommelbremssystem mit Feststellbremsaktuator (3) für ein Kraftfahrzeug nach einem oder mehreren der vorhergehenden Ansprüche 1-12, **dadurch gekennzeichnet, dass** dem freien Motorwellenende (27) in der Getriebegehäuseunterschale (8a) ein Notlager (41) zugeordnet ist.

14. Elektrisches Trommelbremssystem mit Feststellbremsaktuator (3) für ein Kraftfahrzeug nach Anspruch 13, **dadurch gekennzeichnet, dass** das Notlager (41) diametral gegenüber vom Zahneingriff des Schraubradgetriebe als eine einstückige Motorwellenaufnahme (42) der Getriebegehäuseunterschale (8a) aus einem Kunststoffwerkstoff ausgebildet ist.

15. Elektrisches Trommelbremssystem mit Feststellbremsaktuator (3) für ein Kraftfahrzeug nach Anspruch 13 oder 14, **dadurch gekennzeichnet, dass** im Bereich vom Notlager (41) ein Schmierstoffreservoir (43) in der Getriebegehäuseunterschale (8b) vorgesehen ist.

## Claims

1. Electric drum brake system with parking brake actuator (3) for a motor vehicle, wherein the parking brake actuator (3) is arranged on an outer side (12) of an anchor plate (2) and, in a state of rotational drive, drives a drive nut (14) which is supported rotatably and axially fixedly on the anchor plate, which drive nut drives a spindle, which is mounted in a rotationally secured and axially displaceable manner in a gearing housing (8), of a spindle arrangement (9), which spindle engages by means of an actuation cable (5) on at least one brake shoe (6a,b) such that the latter can perform an actuation movement in the direction of a brake drum or can perform a release movement in the opposite direction, and having at least one electrical interface for an electrical human-machine interface and/or for an electronic control unit, wherein an axis A1 along a motor shaft of the motor (7) with helical wheel pinion (28) coupled rotationally conjointly to the free motor shaft end (27) and an axis A2 of the spindle arrangement (9) including helical wheel (29) coupled rotationally conjointly to the drive nut (14) are arranged approximately at right angles with respect to one another and, with an axis spacing X with respect to one another, define a helical-wheel gearing stage of the parking brake actuator (3), and **characterized in that** the gearing housing (8) has a trough-like gearing housing lower shell (8a) with an elevated motor dome (35) including electrical interface (50) and has a gearing housing cover (8b) with an elevated gearing dome (36), the axes A1, A2 of which are provided substantially at right angles and so as to be offset with respect to one another with a defined axis spacing X.

2. Electric drum brake system with parking brake actuator (3) for a motor vehicle according to Claim 1, **characterized in that** the axis A1 is oriented vertically and perpendicularly with respect to a wheel axis of rotation D.

3. Electric drum brake system with parking brake actuator (3) for a motor vehicle as according to Claim 1, **characterized in that** the axis A2 is oriented in a skewed manner with respect to the wheel axis of rotation D and in a skewed manner with respect to the anchor plate (2), and wherein the actuation cable (5) is diverted in curved fashion along a three-dimensional curve R at least on the inner side (13) of the anchor plate (2) and is otherwise arranged so as to be led substantially horizontally.

4. Electric drum brake system with parking brake actuator (3) for a motor vehicle according to one or more of the preceding claims, **characterized in that** all interfaces relating to hydraulic supply, electrical cables etc. for the drum brake are arranged in bundled fashion within one semicircular sector, which is arranged above the wheel axis of rotation D, of the anchor plate (2).

5. Electric drum brake system with parking brake actuator (3) for a motor vehicle according to one or more of the preceding Claims 1 to 4, **characterized in that** the parking brake actuator (3) comprises a single multi-wheel gearing stage.

6. Electric drum brake system with parking brake actuator (3) for a motor vehicle according to one or more of the preceding claims, **characterized in that** the parking brake actuator (3) comprises a cantilevered mounting of the helical wheel pinion (28) based on the motor shaft mounting in the gearing housing (8).

7. Electric drum brake system with parking brake actuator (3) for a motor vehicle according to Claim 6, **characterized in that** the motor shaft mounting comprises at least one rolling bearing which accommodates both radial and axial thrust forces.

8. Electric drum brake system with parking brake actuator (3) for a motor vehicle according to one or more of the preceding claims, **characterized in that** the motor shaft mounting and the mounting of the spindle arrangement (9) in the gearing housing (8) comprise at least two rolling bearings in a fixed bearing arrangement, which transmit both axial forces and radial forces.

9. Electric drum brake system with parking brake actuator (3) for a motor vehicle according to the features of Claim 8, **characterized in that** at least one rolling bearing is received and fixed with a bearing outer ring in a seat in a receptacle of the gearing housing lower shell (8a), such that radial force components and axially directed thrust force components from the tooth meshing are introduced directly into the gearing housing lower shell (8a).

10. Electric drum brake system with parking brake actuator (3) for a motor vehicle according to one or more of the preceding Claims 1 to 9, **characterized in that** at least one rotation prevention means (31) is provided between motor (7) and gearing housing (8), in particular the gearing housing lower shell (8a).

11. Electric drum brake system with parking brake actuator (3) for a motor vehicle according to Claim 10, **characterized in that** a positively locking rotation prevention means (31) comprises at least one projection (32), in particular a cam, on the gearing housing (8), which at least one projection engages into an associated recess (33) of the motor (7), or vice versa.

12. Electric drum brake system with parking brake actuator (3) for a motor vehicle according to one or more of the preceding claims, **characterized in that** the motor (7) is separately assigned, in the region of the helical-wheel gearing, a centring frame (34) which is supported in the gearing housing (8).

13. Electric drum brake system with parking brake actuator (3) for a motor vehicle according to one or more of the preceding Claims 1 to 12, **characterized in that** the free motor shaft end (27) is assigned an emergency bearing (41) in the gearing housing lower shell (8a).

14. Electric drum brake system with parking brake actuator (3) for a motor vehicle according to Claim 13, **characterized in that** the emergency bearing (41) is formed, diametrically opposite the tooth meshing point of the helical-wheel gearing, from a plastics material as a unipartite motor shaft receptacle (42) of the gearing housing lower shell (8a).

15. Electric drum brake system with parking brake actuator (3) for a motor vehicle according to Claim 13 or 14, **characterized in that** a lubricant reservoir (43) is provided in the gearing housing lower shell (8b) in the region of the emergency bearing (41).

## Revendications

1. Système de frein à tambour électrique comprenant un actionneur de frein de stationnement (3) et destiné à un véhicule automobile, l'actionneur de frein de stationnement (3) étant disposé sur un côté extérieur (12) d'une plaque d'ancrage (2), et entraînant en rotation un écrou d'entraînement (14) rotatif et supporté de manière axialement fixe par la plaque d'ancrage et qui entraîne une broche d'un ensemble de broche (9) qui est montée dans un boîtier de transmission (8) de manière fixe en rotation et de façon à pouvoir coulisser axialement et qui agit sur au moins une mâchoire de frein (6a, b) par le biais d'un câble d'actionnement (5) de manière à ce que ladite mâchoire de frein puisse effectuer un mouvement d'actionnement en direction du tambour de frein ou un mouvement de desserrage en sens inverse, et comprenant au moins une interface électrique destinée à une interface homme-machine électrique et/ou une unité de commande électronique, un axe A1 qui s'étend le long d'un arbre du moteur (7) et qui comprend un pignon hélicoïdal (28) accouplé solidairement en rotation à l'extrémité libre de l'arbre (27) du moteur et un axe A2 de l'ensemble de broche (9) qui inclut une roue à dents hélicoïdes (29) accouplée solidairement en rotation à l'écrou d'entraînement (14) étant disposé l'un par rapport à l'autre de manière à former à peu près un angle droit et définissant un étage de transmission à roue à dents hélicoïdes à une distance axiale X de l'actionneur de frein de stationnement (3), et
**caractérisé en ce que** le boîtier de transmission (8) comporte une coque inférieure (8a) en forme de cuvette pourvue d'un dôme de moteur surélevé (35), incluant une interface électrique (50), et un couvercle (8b) pourvu d'un dôme de transmission surélevé (36), leurs axes A1, A2 étant prévus pour être dans une large mesure à angle droit et pour être décalés l'un de l'autre d'une distance X définie.

2. Système de frein à tambour électrique comprenant un actionneur de frein de stationnement (3) et destiné à un véhicule automobile selon la revendication 1, **caractérisé en ce que** l'axe A1 est orienté verticalement et perpendiculairement à un axe de rotation de roue D.

3. Système de frein à tambour électrique comprenant un actionneur de frein de stationnement (3) et destiné à un véhicule automobile selon la revendication 1, **caractérisé en ce que** l'axe A2 est orienté obliquement par rapport à l'axe de rotation de roue D et obliquement par rapport à la plaque d'ancrage (2) et le câble d'actionnement (5) étant dévié de manière incurvée le long d'une courbe gauche R au moins du côté intérieur (13) de la plaque d'ancrage (2) et disposé par ailleurs de manière à être guidé dans une large mesure horizontalement.

4. Système de frein à tambour électrique comprenant un actionneur de frein de stationnement (1) et destiné à un véhicule automobile selon une ou plusieurs des revendications précédentes, **caractérisé en ce que** toutes les interfaces relatives à l'alimentation hydraulique, aux câbles électriques, etc. destinés au frein à tambour sont disposées en faisceau dans un secteur semi-circulaire de la plaque d'ancrage (2) qui est disposé au-dessus de l'axe de rotation de roue D.

5. Système de frein à tambour électrique comprenant un actionneur de frein de stationnement (3) et destiné à un véhicule automobile selon une ou plusieurs des revendications précédentes 1 à 4, **caractérisé en ce que** l'actionneur de frein de stationnement (3) comprend un seul étage de transmission de roues.

6. Système de frein à tambour électrique comprenant un actionneur de frein de stationnement (3) et destiné à un véhicule automobile selon une ou plusieurs des revendications précédentes, **caractérisé en ce que** l'actionneur de frein de stationnement (3) comprend un support flottant du pignon hélicoïdal (28) sur la base du support d'arbre de moteur dans le boîtier de transmission (8).

7. Système de frein à tambour électrique comprenant un actionneur de frein de stationnement (3) et destiné à un véhicule automobile selon la revendication 6, **caractérisé en ce que** le support d'arbre de moteur comprend au moins un palier à rouleaux qui absorbe aussi bien les forces de poussée radiales que les forces de poussée axiales.

8. Système de frein à tambour électrique comprenant un actionneur de frein de stationnement (3) et destiné à un véhicule automobile selon une ou plusieurs des revendications précédentes, **caractérisé en ce que** le support d'arbre de moteur et le support de l'ensemble à broche (9) dans le boîtier de transmission (8) comprennent au moins deux paliers à rouleaux dans un ensemble de paliers fixes qui transmettent aussi bien des forces axiales que des forces radiales.

9. Système de frein à tambour électrique comprenant un actionneur de frein de stationnement (3) et destiné à un véhicule automobile selon les caractéristiques de la revendication 8, **caractérisé en ce qu'**au moins un palier à rouleaux pourvu d'une bague de palier extérieure est logé et fixé dans un siège ménagé dans un logement de la coque inférieure (8a) du boîtier de transmission de sorte que des composantes de forces radiales ainsi que des composantes de forces de poussée dirigées axialement, dues à l'engrènement des dentures, soient injectées directement dans la coque inférieure (8a) du boîtier de transmission.

10. Système de frein à tambour électrique comprenant un actionneur de frein de stationnement (3) et destiné à un véhicule automobile selon une ou plusieurs des revendications précédentes 1 à 9, **caractérisé en ce qu'**au moins un dispositif anti-rotation (31) est prévu entre le moteur (7) et le boîtier de transmission (8), tel que notamment la coque inférieure du boîtier de transmission (8a).

11. Système de frein à tambour électrique comprenant un actionneur de frein de stationnement (3) et destiné à un véhicule automobile selon la revendication 10, **caractérisé en ce qu'**un dispositif anti-rotation (31) à complémentarité de formes comporte au moins une saillie (32) telle que notamment une came au niveau du boîtier de transmission (8), qui s'engage du moteur (7) dans un évidement associé (33), ou inversement.

12. Système de frein à tambour électrique comprenant un actionneur de frein de stationnement (3) et destiné à un véhicule automobile selon une ou plusieurs des revendications précédentes, **caractérisé en ce que**, au niveau de la transmission à roue à dents hélicoïdes, le moteur (7) est associé séparément à une lunette de centrage (34) qui est supportée dans le boîtier de transmission (8).

13. Système de frein à tambour électrique comprenant un actionneur de frein de stationnement (3) et destiné à un véhicule automobile selon une ou plusieurs des revendications précédentes 1 à 12, **caractérisé en ce que** l'extrémité libre d'arbre de moteur (27) est associée dans la coque inférieure (8a) boîtier de transmission à un palier de secours (41).

14. Système de frein à tambour électrique comprenant un actionneur de frein de stationnement (3) et destiné à un véhicule automobile selon la revendication 13, **caractérisé en ce que** le palier de secours (41) est conçu, diamétralement à l'opposé de l'engrènement de la transmission à roue à dents hélicoïdes, comme un logement d'arbre de moteur monobloc (42) de la coque inférieure (8a) du boîtier de transmission à partir d'une matière synthétique.

15. Système de frein à tambour électrique comprenant un actionneur de frein de stationnement (3) et destiné à un véhicule automobile selon la revendication 13 ou 14, **caractérisé en ce qu'**un réservoir de lubrifiant (43) est prévu dans la coque inférieure (8b) du boîtier de transmission au niveau du palier de secours (41).
